# EUROPÄISCHE PATENTANMELDUNG

(11) **EP 4 462 003 A1**
(43) Veröffentlichungstag der Anmeldung: **13.11.2024**
(21) Anmeldenummer: 24158947.2
(22) Anmeldetag: 21.02.2024
(51) Int. Cl.: F16L 37/248, F16L 37/56, F16L 39/00

(54) **VERBINDUNG FÜR WASSERFÜHRENDE BAUTEILE**

(30) Priorität: 11.05.2023 DE 202023102547 U
(71) Anmelder: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(57) **Zusammenfassung**

Eine Verbindungsanordnung für wasserführende Bauteile (10, 12) enthaltend ein erstes wasserführendes Bauteil (12) mit einer ersten Kontaktfläche (26); ein zweites wasserführendes Bauteil (10), welches mit einer zweiten Kontaktfläche (22) mittels Bajonett- oder anderem um die Verbindungsachse drehbaren Drehverschluss mit dem ersten Bauteil (12) verbindbar ist, und eine Dichtung (30, 38) zwischen der ersten und der zweiten Kontaktfläche (22, 26); dadurch gekennzeichnet, dass zusätzlich zum Verschluss ein Rastmechanismus (64, 66) vorgesehen ist, welcher bei Erreichen einer Endstellung einrastet und in eingerasteter Stellung einer Drehung der Bauteile (10, 12) in entgegengesetzter Richtung entgegenwirkt.

## Beschreibung

### Technisches Gebiet

Die Erfindung betrifft eine Verbindungsanordnung für wasserführende Bauteile enthaltend:
(a) ein erstes wasserführendes Bauteil mit einer ersten Kontaktfläche;
(b) ein zweites wasserführendes Bauteil, welches mit einer zweiten Kontaktfläche mittels Bajonett- oder anderem um die Verbindungsachse drehbaren Drehverschluss mit dem ersten Bauteil verbindbar ist, und
(c) eine Dichtung zwischen der ersten und der zweiten Kontaktfläche;

Wasserführende Bauteile sind beispielsweise Rohrleitungen, Anschlussarmaturen, Trinkwasser- und Heizungsarmaturen. Eine Trinkwasser- oder Heizungsarmatur mit einem rohrförmigen Einlassanschluss und einem koaxialen, rohrförmigen Auslassanschluss, kann beispielsweise direkt in einer Rohrleitung installiert werden. Dazu muss die Wasserversorgung unterbrochen und die Rohrleitung aufgebrochen werden. Zum Austauschen der Armatur muss die Rohrleitung erneut aufgebrochen werden. Wenn mehrere Armaturen hintereinandergeschaltet werden, um verschiedene Funktionalitäten zu verwirklichen, beispielsweise Absperrung, Druckminderer, Filter und Wasserbehandlung, nehmen die Armaturen erhebliche Baulängen ein.

Der Austausch, die Ergänzung, die Änderung und die Wartung von Armaturen kann erheblich erleichtert werden, wenn die Armatur an einer Anschlussarmatur angeschlossen wird. Die Anschlussarmatur wird mit rohrförmigem Einlass und Auslass in der Rohrleitung installiert und hat einen Anschluss, an dem der Einlass und Auslass weiterer Armaturen lösbar befestigt werden können. Derartige Anschlüsse erlauben Veränderungen an der angeschlossenen Armatur ohne, dass die Rohrleitung erneut aufgebrochen werden muss. Besonders bewährt haben sich Flanschanschlüsse.

### Stand der Technik

Beispielsweise aus EP 3 095 500 B1 ist eine Anschlussarmatur mit einem planen Flanschanschluss bekannt. Wasser fließt vom Einlass in einen Zentralkanal. Vom Zentralkanal wird das Wasser durch die angeschlossene Armatur geleitet. Das Wasser fließt durch einen um den Zentralkanal herum angeordneten Ringkanal zurück in die Anschlussarmatur und von dort zum Auslass. Die Flanschverbindung wird auf beiden Seiten von einer ebenen Fläche gebildet. Zwischen den Flächen ist eine flächige Axialdichtung angeordnet. Die Flächen müssen zusammengedrückt werden und werden dann miteinander verschraubt. Hierfür ist Werkzeug erforderlich. Besonders vorteilhaft sind derartige Flanschverbindungen, weil sie verschiedene Einbaulagen der angeschlossenen Armaturen erlauben. Gelegentlich ist die Einbausituation beengt. Dann ist es schwierig mit dem Werkzeug an der Armatur anzugreifen.

DE 195 29 189 C1 offenbart eine Flanschverbindung, bei der Schrauben mit Schraubenköpfen an der angeschlossenen Armatur durch Öffnungen gesteckt werden, die einen Öffnungsbereich mit größerem Durchmesser und einen Öffnungsbereich mit geringerem Durchmesser aufweisen. Die Schrauben werden durch die Öffnungsbereiche mit größerem Durchmesser gesteckt. Anschließend werden die Bauteile gegeneinander verdreht, so dass die Schrauben sich durch die Öffnungsbereiche mit geringerem Durchmesser erstrecken. Da die Schraubenköpfe größer sind, als der Durchmesser der darunterliegenden Öffnungsbereiche, kann die Armatur in dieser Endstellung nicht mehr abgezogen werden. Auch bei dieser Verbindung wird eine Axialdichtung verwendet.

### Offenbarung der Erfindung

Es ist Aufgabe der Erfindung, eine Anordnung der eingangs genannten Art zu schaffen, leichter zu handhaben ist.

Erfindungsgemäß wird die Aufgabe bei einer Anordnung der eingangs genannten Art dadurch gelöst, dass zusätzlich zum Verschluss ein Rastmechanismus vorgesehen ist, welcher bei Erreichen einer Endstellung einrastet und in eingerasteter Stellung einer Drehung der Bauteile in entgegengesetzter Richtung entgegenwirkt.

Die erfindungsgemäße Anordnung hat den Vorteil, dass durch das Einrasten des Rastmechanismus genau definiert ist, wann die Endstellung erreicht wird. Bei der Installation müssen also nicht mehr Kräfte als unbedingt erforderlich aufgewendet werden, um beispielsweise eine ausreichende Dichtkraft zu erreichen. Umgekehrt wird auch definiert, wie weit die Bauteile gegeneinander verdreht werden müssen, um die gewünschte Endstellung zu erreichen. Die Endstellung kann beispielsweise dadurch definiert sein, dass strömungsführende Kanäle exakt aneinandergrenzen oder eine ausreichende Dichtkraft erreicht wird. Besonders vorteilhaft ist die Erfindung, weil das Drehen der Bauteile um die Verbindungsachse ohne Werkzeuge möglich ist. Es müssen keine Schrauben angezogen werden.

Besonders geeignet ist die erfindungsgemäße Verbindungsanordnung, wenn das erste und das zweite Bauteil im Verbindungsbereich koaxial zur Verbindungsachse jeweils einen Zentralkanal und einen darum herum verlaufenden Ringkanal aufweisen. Das entspricht der Strömungsführung, die auch bei herkömmlichen Flanschanschlüssen bekannt ist.

Besonders vorteilhaft ist es, wenn der Zentralkanal und der Ringkanal im Verbindungsbereich zusammensteckbar und mit wenigstens einer Ringdichtung in radialer Richtung abgedichtet sind. Bei einer solchen Radialdichtung ist nur ein geringer Anpressdruck in Verbindungsrichtung beim Zusammenstecken erforderlich. Es müssen keine Schrauben oder Gewinde festgezogen werden. Das schont das Material und braucht kein Werkzeug. Es sind bei mehreren Kanälen auch keine gleichlaufenden Gewinde erforderlich.

Insbesondere kann vorgesehen sein, dass der Zentralkanal und/oder der Ringkanal an wenigstens einer der Kontaktflächen rohrförmig ausgebildet sind und im Verbindungsbereich eine verringerte Wandstärke aufweisen, so dass eine einen Anschlag bildende Ringschulter gebildet ist. Die Bauteile können dann bis zum Anschlag zusammengesteckt werden. Dann werden die Bauteile gegeneinander verdreht, bis der Rastmechanismus einrastet.

Bei einer konkreten Ausgestaltung der Erfindung ist vorgesehen, dass
(a) eine der Kontaktflächen mit einem in radialer Richtung vorspringenden, umlaufenden Rand mit wenigstens einer Öffnung oder Aussparung in Verbindungsrichtung versehen ist,
(b) die wenigstens eine Öffnung oder Aussparung jeweils einen Öffnungsbereich mit einem größeren Durchmesser und einen damit verbundenen Öffnungsbereich mit einem geringeren Durchmesser aufweist;
(c) die andere Kontaktfläche mit wenigstens einem in Verbindungsrichtung vorspringenden Verbindungsstift mit einem Kopf versehen ist, welcher durch den Öffnungsbereich mit einem größeren Durchmesser, nicht aber durch den Öffnungsbereich mit dem geringeren Durchmesser hindurchsteckbar ist; und
(d) der wenigstens eine Verbindungsstift und der Kopf durch Drehen der Kontaktflächen gegeneinander um die Verbindungsachse in den Öffnungsbereich mit geringerem Durchmesser bewegbar ist.

Beispielsweise können vier gleichmäßig in Umfangsrichtung verteilte Verbindungsstifte an dem einen Bauteil und zugehörige Öffnungen an dem anderen Bauteil vorgesehen sein. Die Stifte können bereits vormontiert sein. Sie können mit einem Gewinde in das Bauteil eingeschraubt oder angeformt sein. Die Bauteile werden so zusammengesteckt, dass die Stifte mit dem Kopf vollständig durch die Öffnungsbereiche mit größerem Durchmesser ragen. Die Öffnungsbereiche mit kleinerem Durchmesser sind in Umfangsrichtung alle auf der gleichen Seite der Öffnungen, so dass der Hals der Stifte bei Drehung der Bauteile gegeneinander in diese Bereiche bewegt wird. Dort kann der Kopf die Öffnung nicht mehr passieren und die Bauteile sind in Verbindungsrichtung arretiert. Der Rastmechanismus verhindert, dass die Bauteile zurückgedreht werden können.

Grundsätzlich sind eine Vielzahl verschiedener Rastmechanismen bekannt, die für diese Verwendung geeignet sind. Besonders bevorzugt ist aber, wenn der Rastmechanismus ein mit einer Kraft in Verbindungsrichtung beaufschlagtes Rastelement an einem der Bauteile umfasst, welches in der Endstellung in eine Rastöffnung in dem anderen Bauteil einrastet. Beispielsweise kann vorgesehen sein, dass das Rastelement von einem Stift oder Bolzen gebildet ist, der in Verbindungsrichtung von einem der Bauteile vorspringt und die Rastöffnung in einem in radialer Richtung vorspringenden Rand des anderen Bauteils gebildet ist.

Eine besonders einfache Ausgestaltung der Erfindung sieht vor, dass das Rastelement von der Kraft einer Feder beaufschlagt ist, welche das Rastelement in der Endstellung in die Rastöffnung drückt. Das Rastelement ist also vorgespannt und wird bei Erreichen der Endstellung in die Rastöffnung gedrückt. Die Feder hält das Rastelement in dieser Stellung.

Es kann ferner ein Hebel oder Griff zum Lösen des Rastmechanismus vorgesehen sein. Beim Betätigen dieses Hebels oder Griffs wird eine Kraft entgegen der Federkraft auf das Rastelement ausgeübt. Dann kann das Rastelement zurückbewegt und die Bauteile zurückgedreht und getrennt werden.

Eine besonders komfortable Lösung sieht eine Anzeige vor, welche das Einrasten des Rastmechanismus anzeigt. Zusätzlich oder alternativ können Materialien verwendet werden, die ein akustisches Geräusch, etwa ein Klacken verursachen, so dass der Installateur oder die Installateurin wahrnimmt, dass das Rastelement eingerastet ist.

Die Anzeige kann beispielsweise von einem Anzeige- und Arretierstift gebildet sein, welcher bei Einrasten des Rastmechanismus in eine den Hebel oder Griff blockierende Stellung bewegt wird. Dabei kann insbesondere vorgesehen sein, dass der Anzeige- und Arretierstift nicht zerstörungsfrei aus der blockierenden Stellung heraus bewegbar ist. Eine solche Anordnung hat den Vorteil, dass ein einmal installiertes und eingerastetes Bauteil nicht mehr zerstörungsfrei gelöst werden kann. Manipulationen durch nicht-autorisiertes Personal werden auf diese Weise sofort erkannt. Der Anzeige- und Arretierstift wirkt also nicht nur als Anzeige, sondern auch wie eine Plombe.

Besonders vorteilhaft ist eine solche Anzeige, wenn ein Gehäuse zum Einhausen wenigstens eines der wasserführenden Bauteile vorgesehen ist und der Anzeige- und

Arretierstift zumindest teilweise in oder durch eine Öffnung in diesem Gehäuse ragt und von außen sichtbar ist.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder der Wettbewerber, forschenden Institute, Universitäten und Verbände, beispielsweise DVGW oder VDI, dargelegt sind. Insbesondere haben die verwendeten Begriffe nicht die gegenteilige Bedeutung dessen, was der Fachmann den obigen Publikationen entnimmt.

### Kurze Beschreibung der Zeichnungen

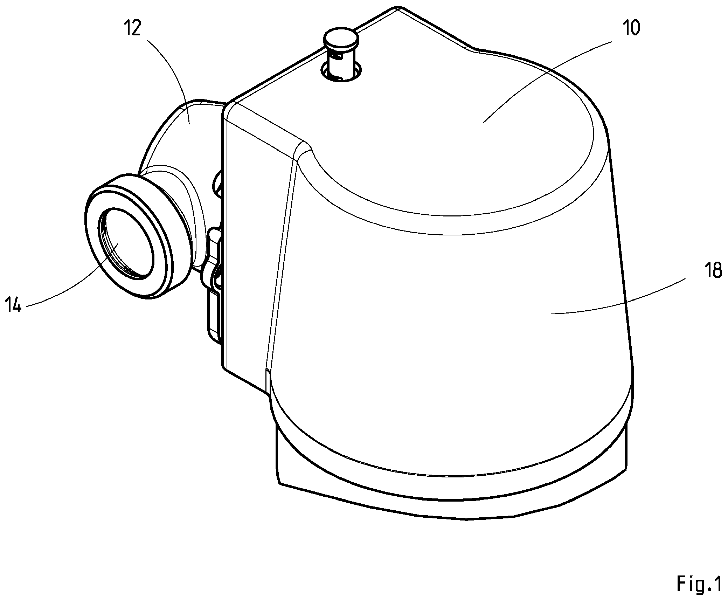

- Fig.1: ist eine perspektivische Darstellung eines an einer Anschlussarmatur angeschlossenen Filterkopfes mit Gehäuse und vorspringendem Anzeigestift aus einer ersten Perspektive.
- Fig.2: ist eine perspektivische Darstellung der Anordnung aus Figur 1 aus einer zweiten Perspektive.
- Fig.3: ist ein Vertikalschnitt durch einen Teil der Anordnung aus Figur 1 in Endstellung mit eingerastetem Rastelement in der Ebene der Verbindungsachse zwischen Filter und Anschlussarmatur.
- Fig.4: ist ein Vertikalschnitt durch einen Teil der Anordnung aus Figur 1 senkrecht zur Verbindungsachse zwischen Filter und Anschlussarmatur.

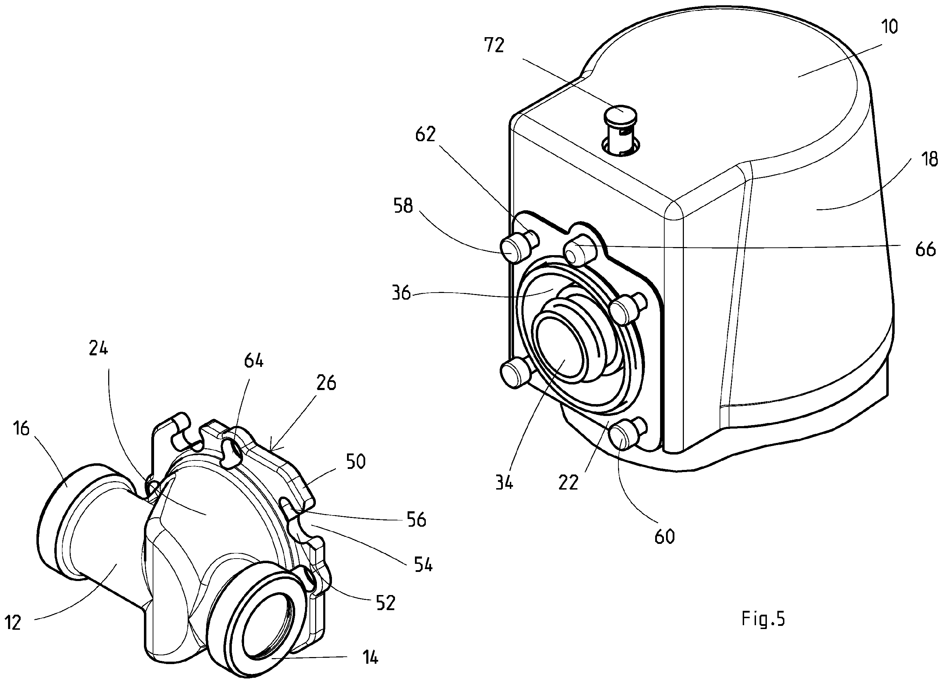

- Fig.5: zeigt die Anordnung aus Figur 2 mit gelöster Verbindung.
- Fig.6: zeigt die Anordnung aus Figur 3 mit eingedrücktem Anzeige- und Arretierstift.
- Fig.7: zeigt die Anordnung aus Figur 4 mit eingedrücktem Anzeige- und Arretierstift.
- Fig.8: zeigt die Anordnung aus Figur 7 in vergrößerter Darstellung.
- Fig.9: zeigt die Anordnung aus Figur 3 vor Erreichen der Endstellung, bei der das Rastelement noch nicht eingerastet ist.
- Fig. 10: zeigt die Anordnung ähnlich wie Figur 2 vor Erreichen der Endstellung, bei der das Rastelement noch nicht eingerastet ist.
- Fig. 11: zeigt den Filter aus Figur 1 ohne Gehäuse und ohne Anschlussarmatur.
- Fig. 12: zeigt die Anschlussarmatur aus Figur 1 ohne Filter.

### Beschreibung des Ausführungsbeispiels

Die Figuren zeigen zwei wasserführende Bauteile 10 und 12. Im vorliegenden Ausführungsbeispiel ist das Bauteil 12 eine Anschlussarmatur, die mit einem Einlass 14 und einem koaxialen Auslass 16 in einer Rohrleitung (nicht dargestellt) installiert werden kann. Das Bauteil 10 ist im vorliegenden Ausführungsbeispiel ein Wasserfilter. Es versteht sich, dass die Anschlussarmatur 12 und der Wasserfilter 10 hier nur beispielhaft dargestellt sind und jede andere Art von wasserführendem Bauteil einschließlich jeder Art von Trink- und Heizungswasserarmaturen, beispielsweise Filter mit und ohne Rückspülung, Ionentauscher und andere Wasserbehandlungsgeräte, Dosierarmaturen, Messarmaturen, Systemtrenner, Sicherheits- und Sicherungsarmaturen als Bauteile verwendet werden können.

Der Filter 10 ist mit einem äußeren Gehäuse in Form einer Haube 18 versehen. Die Haube 18 dient nicht nur ästhetischen Zwecken, sondern auch zum Schutz vor Umwelteinflüssen, Manipulation und Verschmutzung. Der Filter 10 wird über die nachstehende Verbindungsanordnung mit der Anschlussarmatur 12 verbunden. Hierzu weist der Filter 10 ein Armaturengehäuse 20 mit einer ersten Kontaktfläche 22 auf. Die Anschlussarmatur 12 weist ein Armaturengehäuse 24 mit einer zugehörigen zweiten Kontaktfläche 26 auf.

Der Einlass 16 mündet in einem Zentralkanal 28, der mittig in der Kontaktfläche 26 angeordnet ist. Der Zentralkanal 28 ist im Bereich der Kontaktfläche 26 im wesentlichen rohrförmig. Auf der Innenseite des Zentralkanals 28 ist im Bereich der Kontaktfläche 26 eine Ringnut mit einer Dichtung 30 vorgesehen.

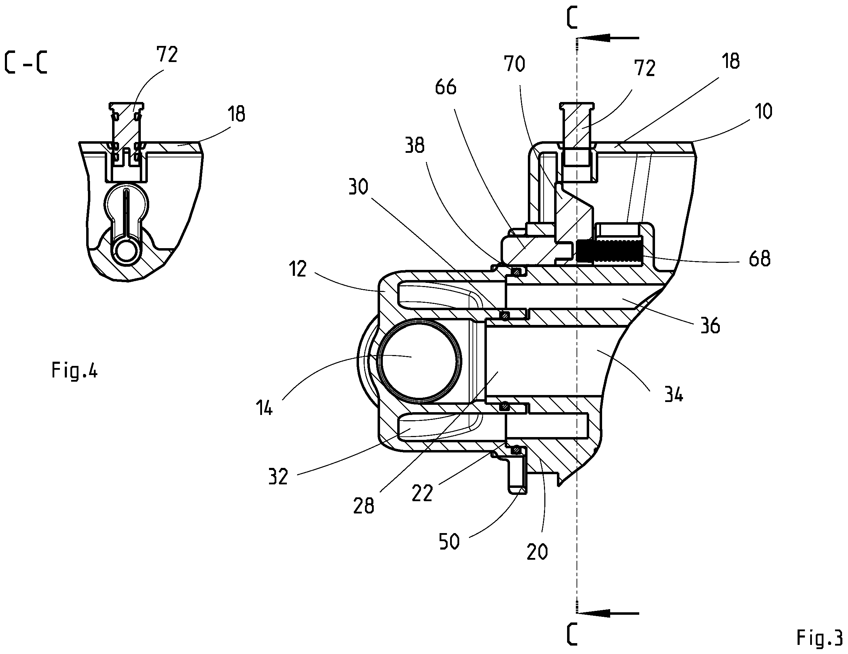

Um den Zentralkanal 28 herum ist ein Ringkanal 32 angeordnet. Der Ringkanal 32 ist mit dem Auslass 16 verbunden. Auf der Innenseite des Ringkanals 32 ist im Bereich der Kontaktfläche 26 eine Ringnut mit einer Dichtung 38 vorgesehen. Die Dichtungen 30 und 38 sind in den Figuren 3, 6 und 9 gut zu erkennen. Wasser fließt - ähnlich wie bei bekannten Flanschanschlüssen - vom Einlass 14 durch den Zentralkanal 28 in die angeschlossene Armatur 10 und von der Armatur 10 durch den Ringkanal 32 zurück zum Auslass 16.

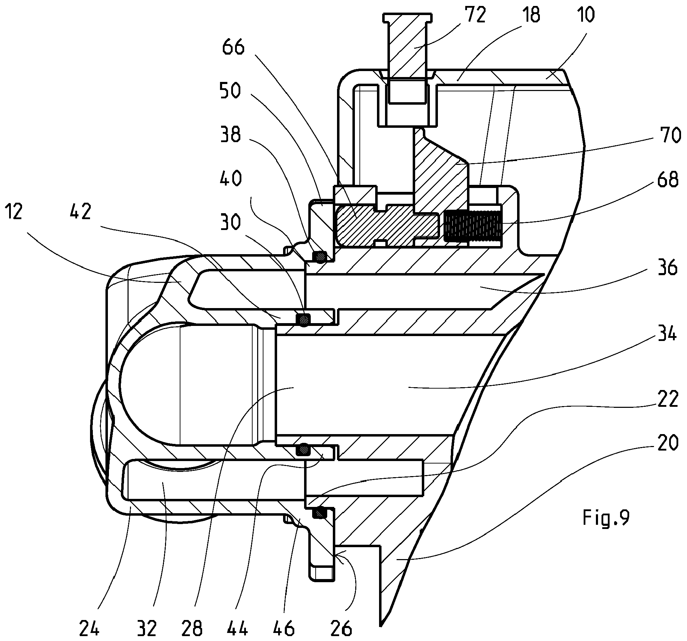

Entsprechend weist das Armaturengehäuse 20 der Armatur 10 im Verbindungsbereich einen passenden Zentralkanal 34 und einen darum herum angeordneten Ringkanal 36 auf. Anders als bekannte Flanschanschlüsse werden die Kontaktflächen 22 und 26 an den Bauteilen 10 und 12 jedoch nicht plan zusammengepresst. Stattdessen umfassen die Kontaktflächen im Bereich der Zentralkanäle 28 und 34, sowie im Bereich der Ringkanäle 32 und 36 rohrförmige Abschnitte, die zusammengesteckt und mit Dichtungen 30 und 38 abgedichtet werden. Die Dichtungen sind folglich Radialdichtungen, die - anders als Axialdichtungen - nicht zusätzlich zusammengepresst werden müssen. Dies ist in Figur 9 gut zu erkennen.

Im vorliegenden Ausführungsbeispiel haben die Wandungen des Zentralkanals 34 und des Ringkanals 36 an ihren verbindungsseitigen Enden 40 und 42 des Armaturengehäuses 20 eine etwas verringerte Dicke. Die Wandung des Zentralkanals 28 und des Ringkanals 32 haben ebenfalls an ihren verbindungsseitigen Enden 44 und 46 des Armaturengehäuses 24 der Anschlussarmatur 12 eine verringerte Dicke. Auf diese Weise können die verbindungsseitigen Enden 40 und 44 bzw. 42 und 46 gut zusammengesteckt werden. Die stufenförmigen Übergänge bilden einen Anschlag, welcher die Tiefe, mit der die Kontaktflächen zusammensteckbar sind, begrenzen. Im vorliegenden Ausführungsbeispiel ist die Wandung des Zentralkanals 34 in die Wandung des Zentralkanals 28 eingesteckt und die Wandung des Ringkanals 36 ist in die Wandung des Ringkanals 32 eingesteckt. Es versteht sich, dass mit anders gestalteten Durchmessern auch umgekehrt zusammengesteckt werden kann.

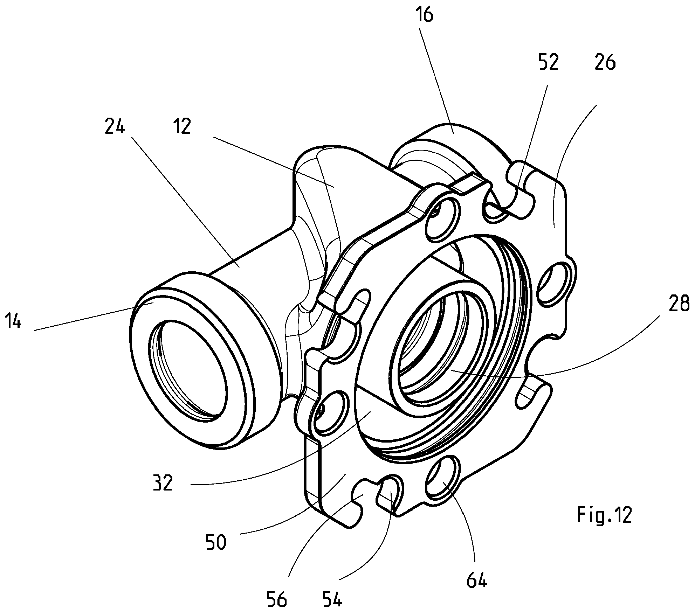

Die Kontaktfläche 26 der Anschlussarmatur 12 umfasst einen radial nach außen vorspringenden, umlaufenden Rand 50. Der Rand 50 bildet einen Flansch mit einer planen Verbindungsfläche, die sich senkrecht zur Verbindungsachse zwischen Anschlussarmatur 12 und Filter 10 erstreckt. Der Rand 50 ist in Figur 12 gut zu erkennen.

Der Rand 50 ist mit vier Öffnungen 52 versehen. Im vorliegenden Ausführungsbeispiel sind die Öffnungen 52 zum Rand hin offen. Es versteht sich, dass auch geschlossene Öffnungen 52 und mehr oder weniger Öffnungen verwendet werden können. Die Öffnungen 52 sind gleichmäßig in Umfangsrichtung verteilt. Jede der Öffnungen 52 weist - ähnlich wie ein Schlüsselloch - einen Bereich 54 mit größerem Durchmesser und einen in Umfangsrichtung damit verbundenen Bereich 56 mit kleinerem Durchmesser auf.

An der Kontaktfläche 22 des Filters 10 sind vier passende Verbindungsstifte 60 mit einem Kopf 58 und einem Hals 62 befestigt. Die Verbindungsstifte können koaxial zur Verbindungsachse in das Armaturengehäuse 20 beispielsweise eingeschraubt, angeschweißt oder angeformt sein. Der Durchmesser des Kopfes 58 ist geringer als der Durchmesser des Öffnungsbereichs 54 und größer als der Durchmesser des Öffnungsbereichs 56 der Öffnungen 52 im Rand 50. Der Hals 62 der Verbindungsstifte 60 ist länger als die Dicke des Randes 50 in Verbindungsrichtung. Es versteht sich, dass auch die Anzahl der Verbindungsstifte 60 der Anzahl der Öffnungen 52 entspricht und mehr oder weniger Verbindungsstifte 60 für mehr oder weniger Öffnungen 52 vorgesehen sein können.

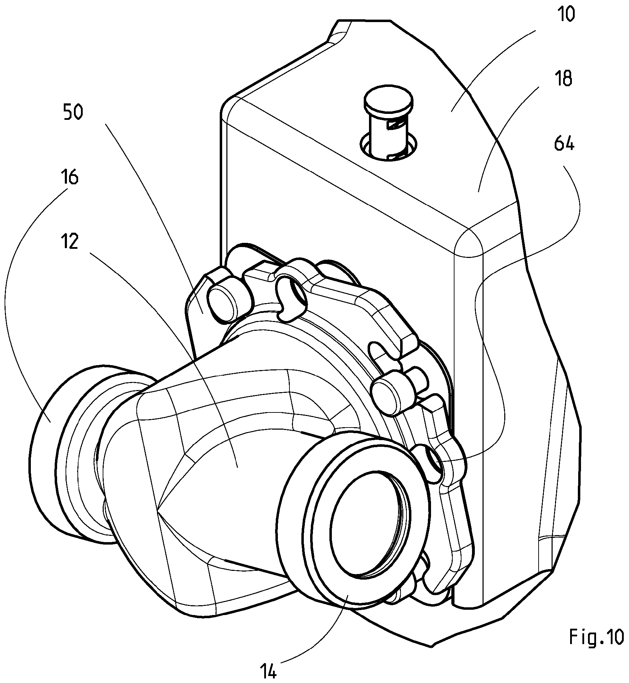

Der Filter 10 oder ein beliebiges anderes wasserführendes Bauteil mit einer solchen Kontaktfläche 22 kann nun auf die Kontaktfläche 26 der Anschlussarmatur 12 oder eines beliebigen anderen wasserführenden Bauteils aufgesteckt werden. Dies ist in Figur 9 und Figur 10 illustriert. Dabei werden die Zentralkanäle und die Ringkanäle wie oben beschrieben zusammengesteckt und die Verbindungsstifte 60 durch den Bereich 54 zugehöriger Öffnungen 52 geführt bis die planen Abschnitte der Kontaktflächen 26 und 22 aufeinanderliegen. Es ist nicht erforderlich, diese zusammenzupressen und es ist keine Axialdichtung vorgesehen. Die Kanäle werden durch die Dichtungen 30 und 38 abgedichtet.

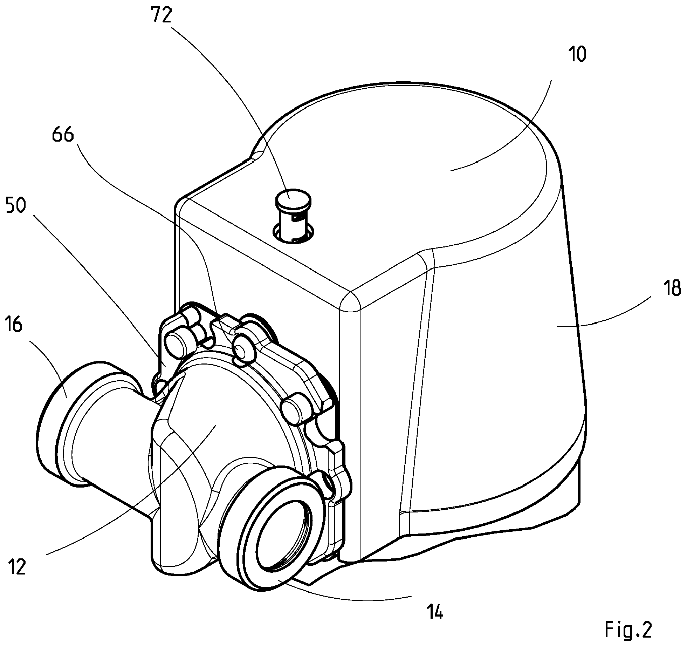

Die so zusammengeführten Bauteile 10 und 12 werden nun um die Verbindungsachse gegeneinander verdreht. Dabei werden die Verbindungsstifte 60 mit dem Hals 62 in den Öffnungsbereich 56 mit geringerem Durchmesser bewegt. In dieser Endstellung wird die Verbindung der beiden Bauteile in axialer Richtung fixiert. Der Kopf 58 passt nicht durch den Öffnungsbereich 56 mit geringerem Durchmesser. Dies ist in Figur 2 gut zu erkennen.

Zur Sicherung der Winkelposition der Bauteile zueinander ist ein Rastmechanismus vorgesehen. Im vorliegenden Ausführungsbeispiel sind hierfür vier Rastöffnungen 64 im Rand 50 vorgesehen. Die Rastöffnungen 64 sind in Umfangsrichtung gleichmäßig verteilt und befinden sich etwa auf der Hälfte zwischen zwei Öffnungen 52. Es versteht sich, dass auch weniger Rastöffnungen 64 vorgesehen sein können, beispielsweise wenn keine Anpassung der Einbaulage erforderlich ist und die Bauteile immer die gleiche Winkellage zueinander einnehmen.

Parallel zu den Verbindungsstiften 60 ist ein Rastelement in Form eines Bolzens 66 im Armaturengehäuse 20 längsverschieblich gelagert. Der Bolzen 66 wird mit der Federkraft einer Feder 68 nach außen gedrückt. Die Feder 68 ist in den Figuren 3, 6 und 9 gut zu erkennen. Die Lage der Rastöffnungen 64 ist derart gewählt, dass der Bolzen 66 auf den planen Teil der Kontaktfläche 26 trifft, wenn die Bauteile zusammengeführt und die Verbindungsstifte 60 durch die Öffnungen 52 gesteckt werden. Dies ist in Figur 9 illustriert. Durch Drehen der Bauteile um die Verbindungsachse wird eine der Rastöffnungen 64 in den Bereich des Bolzens 66 bewegt. Bei Erreichen der Endstellung, wenn die Verbindungsstifte im Bereich 56 anschlagen, ist eine der Rastöffnungen 64 koaxial zum Bolzen 66. Dieser wird in der in Figur 2, 3 und 6 gezeigten Endstellung in axialer Richtung nach links in den Figuren in die Rastöffnung 64 gedrückt. Die so eingerastete Anordnung verhindert die Drehbewegung der Bauteile gegeneinander. Die Verbindung ist eingerastet.

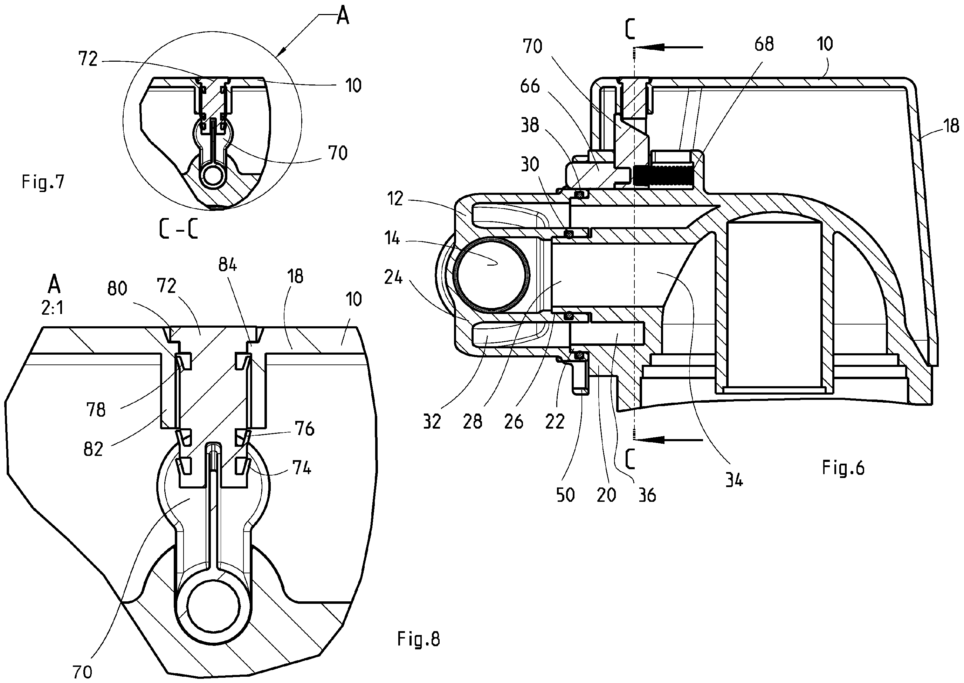

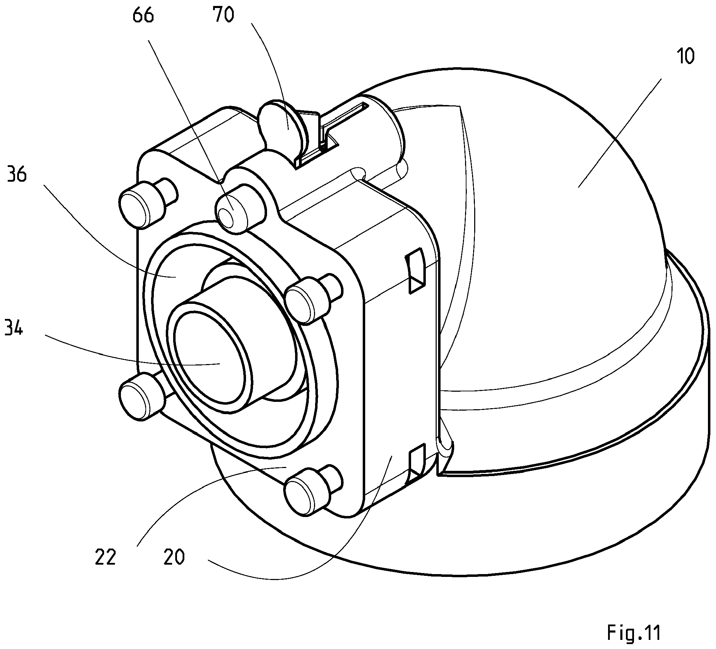

Zum Lösen des Rastmechanismus ist ein Schieber 70 vorgesehen, mit dem der Bolzen 66 gegen die Federkraft der Feder 68 nach rechts in der Darstellung zurückbewegt werden kann. Der Schieber 70 ragt nach oben aus dem Armaturengehäuse 20 heraus und lässt sich von außen betätigen. Dies ist in Figur 7, 8 und 11 gut zu erkennen. Der untere Teil des Schiebers 70 ist verbreitert und weist zwei koaxiale Aussparungen auf, in welche der Bolzen 66 einerseits und die Feder 68 andererseits eingreifen. Die Federkraft wird also nur mittelbar über den Schieber 70 auf den Bolzen 66 übertragen. Entsprechend folgt der Schieber 70 jeder Bewegung des Bolzens 66 und umgekehrt. Figur 9 zeigt den Bolzen in zurückgezogener Position, bei der er noch nicht in der Rastöffnung eingerastet ist. Figur 3 zeigt den Bolzen in eingerasteter Position.

Das Bewegen des Bolzens 66 mit dem Schieber 70 kann mit einem Anzeige- und Arretierstift 72 blockiert werden. Der Anzeige- und Arretierstift 72 wird in der Haube 18 gehalten. Figur 3 und 4 zeigen den Anzeige- und Arretierstift 72 in einer Transportstellung, d.h. bevor er eine Blockierstellung einnimmt. Figuren 6 bis 8 zeigen den Anzeige- und Arretierstift 72 in einer Blockierstellung.

Der Anzeige- und Arretierstift 72 ist in Figur 8 im Detail dargestellt. Er ist mit Widerhaken 74, 76 und 78 auf drei verschiedenen Höhen versehen. Am oberen Ende weist der Anzeige- und Arretierstift 72 einen umlaufenden Rand 80 auf. Die Haube 18 ist mit einer Öffnung versehen, an die eine nach unten ragende, zylindrische Führung 82 angeformt ist. Die Führung 82 ist im oberen Bereich mit einem nach innen ragenden Ringvorsprung 84 versehen. Dies ist in Figur 8 gut zu erkennen.

In der in Figur 3 und 9 gezeigten Transportstellung ragt der Anzeige- und Arretierstift aus der Haube 18 heraus. Der Stift kann aber nicht herausfallen, weil der Ringvorsprung 84 den Stift an den Widerhaken 76 zurückhält.

Wenn die Verbindung zwischen den Bauteilen 10 und 12 hergestellt, aber der Bolzen noch nicht eingerastet wurde, befindet sich der Schieber 70 in einer rechten Position, die in Figur 9 dargestellt ist. Die Feder 68 ist gestaucht und der Bolzen 66 ist vollständig im Gehäuse. Durch Verdrehen der Bauteile gegeneinander um die Verbindungsachse rastet der Bolzen ein. Nachdem die Verbindung zwischen den Bauteilen 10 und 12 hergestellt und eingerastet wurde, befindet sich der Schieber 70 in einer linken Position. Dies ist in Figur 3 illustriert. In dieser Endstellung ist der nach oben ragende Teil des Schiebers 70 außerhalb des Öffnungsbereichs in der Haube 18, der für den Stift 72 vorgesehen ist. Dann lässt sich der Anzeige- und Arretierstift nach unten drücken. Die Arretierte Stellung ist in Figur 6 illustriert.

Der Anzeige- und Arretierstift 72 lässt sich nicht zerstörungsfrei nach oben bewegen. Wenigstens einer der Widerhaken 74, 76 und 78 muss an dem Ringvorsprung 84 vorbeibewegt werden und wird dabei beschädigt. Auf diese Weise können die Bauteile 10 und 12 manipulationssicher miteinander verbunden werden. Wenn der Anzeige- und Arretierstift 72 herausbewegt und die Arretierung des Schiebers 70 gelöst wird, ist dies nachträglich jederzeit nachweisbar. Zur besseren Kennung können der Bolzen 66 und/oder der Anzeige- und Arretierstift 72 farbig markiert werden, damit sofort erkennbar ist, ob die Endstellung erreicht wurde und ob der Schieber ordnungsgemäß und manipulationssicher arretiert wurde. Wenn die Endstellung nicht erreicht wurde, lässt sich der Anzeige- und Arretierstift 72 nicht in das Gehäuse drücken.

Die Anordnung erlaubt das Verbinden von zwei wasserführenden Bauteilen, ohne dass diese gegen den Wasserdruck zusammengepresst werden müssen und ohne dass ein Werkzeug eingesetzt werden muss. Die Verbindung lässt sich daher deutlich schneller herstellen und erlaubt verschiedene Einbausituationen.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Verbindungsanordnung für wasserführende Bauteile (10, 12) enthaltend:
(a) ein erstes wasserführendes Bauteil (12) mit einer ersten Kontaktfläche (26);
(b) ein zweites wasserführendes Bauteil (10), welches mit einer zweiten Kontaktfläche (22) mittels Bajonett- oder anderem um die Verbindungsachse drehbaren Drehverschluss mit dem ersten Bauteil (12) verbindbar ist, und
(c) eine Dichtung (30, 38) zwischen der ersten und der zweiten Kontaktfläche (22, 26);
**dadurch gekennzeichnet, dass**
(d) zusätzlich zum Verschluss ein Rastmechanismus (64, 66) vorgesehen ist, welcher bei Erreichen einer Endstellung einrastet und in eingerasteter Stellung einer Drehung der Bauteile (10, 12) in entgegengesetzter Richtung entgegenwirkt.

2. Verbindungsanordnung nach Anspruch 1, **dadurch gekennzeichnet, dass** das erste und das zweite Bauteil (10, 12) im Verbindungsbereich koaxial zur Verbindungsachse jeweils einen Zentralkanal (28, 34) und einen darum herum verlaufenden Ringkanal (32, 36) aufweisen.

3. Verbindungsanordnung nach Anspruch 2, **dadurch gekennzeichnet, dass** der Zentralkanal (28, 34) und der Ringkanal (32, 36) im Verbindungsbereich zusammensteckbar und mit wenigstens einer Ringdichtung (30, 38) in radialer Richtung abgedichtet sind.

4. Verbindungsanordnung nach Anspruch 3, **dadurch gekennzeichnet, dass** der Zentralkanal (28, 34) und/oder der Ringkanal (30, 38) an wenigstens einer der Kontaktflächen rohrförmig ausgebildet sind und im Verbindungsbereich (40, 42) eine verringerte Wandstärke aufweisen, so dass eine einen Anschlag bildende Ringschulter gebildet ist.

5. Verbindungsanordnung nach einem der vorgehenden Ansprüche, **dadurch gekennzeichnet, dass**
(a) eine der Kontaktflächen mit einem in radialer Richtung vorspringenden, umlaufenden Rand (50) mit wenigstens einer Öffnung oder Aussparung (52) in Verbindungsrichtung versehen ist,
(b) die wenigstens eine Öffnung oder Aussparung (52) jeweils einen Öffnungsbereich (54) mit einem größeren Durchmesser und einen damit verbundenen Öffnungsbereich (56) mit einem geringeren Durchmesser aufweist;
(c) die andere Kontaktfläche mit wenigstens einem in Verbindungsrichtung vorspringenden Verbindungsstift (60) mit einem Kopf (58) versehen ist, welcher durch den Öffnungsbereich (54) mit einem größeren Durchmesser, nicht aber durch den Öffnungsbereich (56) mit dem geringeren Durchmesser hindurchsteckbar ist; und
(d) der wenigstens eine Verbindungsstift (60) und der Kopf (58) durch Drehen der Kontaktflächen (22, 26) gegeneinander um die Verbindungsachse in den Öffnungsbereich (56) mit geringerem Durchmesser bewegbar ist.

6. Verbindungsanordnung nach einem der vorgehenden Ansprüche, **dadurch gekennzeichnet, dass** der Rastmechanismus ein mit einer Kraft in Verbindungsrichtung beaufschlagtes Rastelement (66) an einem der Bauteile (10) umfasst, welches in der Endstellung in eine Rastöffnung (64) in dem anderen Bauteil (12) einrastet.

7. Verbindungsanordnung nach Anspruch 6, **dadurch gekennzeichnet, dass** das Rastelement von einem Stift oder Bolzen (66) gebildet ist, der in Verbindungsrichtung von einem der Bauteile (10) vorspringt und die Rastöffnung (64) in einem in radialer Richtung vorspringenden Rand (50) des anderen Bauteils (12) gebildet ist.

8. Verbindungsanordnung nach Anspruch 6 oder 7, **dadurch gekennzeichnet, dass** das Rastelement (66) von der Kraft einer Feder (68) beaufschlagt ist, welche das Rastelement (66) in der Endstellung in die Rastöffnung (64) drückt.

9. Verbindungsanordnung nach einem der vorgehenden Ansprüche, **dadurch gekennzeichnet, dass** ein Hebel oder Griff (70) zum Lösen des Rastmechanismus vorgesehen ist.

10. Verbindungsanordnung nach Anspruch 9, **dadurch gekennzeichnet, dass** eine Anzeige (72) vorgesehen ist, welche das Einrasten des Rastmechanismus anzeigt.

11. Verbindungsanordnung nach Anspruch 10, **dadurch gekennzeichnet, dass** die Anzeige von einem Anzeige- und Arretierstift (72) gebildet ist, welcher bei Einrasten des Rastmechanismus in eine den Hebel oder Griff (70) blockierende Stellung bewegt wird.

12. Verbindungsanordnung nach Anspruch 11, **dadurch gekennzeichnet, dass** der Anzeige- und Arretierstift (72) nicht zerstörungsfrei aus der blockierenden Stellung heraus bewegbar ist.

13. Verbindungsanordnung nach einem der Ansprüche 11 oder 12, **dadurch gekennzeichnet, dass** ein Gehäuse (18) zum Einhausen wenigstens eines der wasserführenden Bauteile vorgesehen ist und der Anzeige- und Arretierstift (72) zumindest teilweise in oder durch eine Öffnung in diesem Gehäuse ragt und von außen sichtbar ist.
